# EUROPEAN PATENT APPLICATION

(11) **EP 4 266 460 A1**
(43) Date of publication of application: **25.10.2023**
(21) Application number: 21907008.3
(22) Date of filing: 10.12.2021
(51) Int. Cl.: H01M 50/124, H01M 50/126, H01M 50/105, H01M 50/131, B32B 15/08, B32B 15/20

(54) **ALUMINUM POUCH FILM FOR SECONDARY BATTERY**

(30) Priority: 18.12.2020 KR 20200179039; 24.11.2021 KR 20210163362
(71) Applicant: SBTL Advanced Materials Co. Ltd., Hwaseong-si, Gyeonggi-do 18559 (KR)
(72) Inventor: SHIM, Jun Ho, Seoul 08329 (KR); CHUN, Sang Wook, Hwaseong-si, Gyeonggi-do 18442 (KR); PARK, Sung Il, Cheonan-si, Chungcheongnam-do 31114 (KR); JANG, Pill Gyu, Daejeon 34404 (KR); LEE, Soon Sik, Cheongju-si, Chungcheongbuk-do 28121 (KR)
(74) Representative: dompatent von Kreisler Selting Werner - Partnerschaft von Patent- und Rechtsanwälten mbB
(86) International application number: PCT/KR2021/018774
(87) International publication number: WO 2022/131704

(57) **Abstract**

The present invention provides an aluminum pouch film for a secondary battery, the film comprising: an aluminum film layer; an outer resin layer deposited on one surface of the aluminum film layer; and an inner resin layer deposited on the other surface of the aluminum film layer, wherein the inner resin layer comprises a polyolefin resin, an ethylene vinyl alcohol copolymer (EVOH) and a maleic anhydride polypropylene (MAHPP) resin.

## Description

### [Technical Field]

The present application claims the benefits of priority based Korean Patent Application No. 10-2020-0179039 filed on December 18, 2020, and Korean Patent Application No. 10-2021-0163362 filed on November 24, 2021, the entire contents of which are incorporated herein by reference.

The present invention to an aluminum pouch film for a secondary battery.

### [Background Art]

A lithium secondary battery refers to a battery generating a current through lithium ion migration, and a pouch for a secondary battery is used as an exterior material for packaging to protect such a secondary battery. Such a pouch for a secondary battery has a form having an aluminum thin film interposed in order to protect a battery cell formed with an electrode assembly and an electrolyte solution filled therein by a subsequent process, and to stably maintain electrochemical properties and the like of the battery cell.

On one surface of the aluminum thin film, a functional polymer film layer such as a polyethylene terephthalate (PET) resin, a polyethylene naphthalate (PEN) resin, a nylon resin or a liquid crystal polymer (LCP) resin is laminated as an outer resin layer in order to protect the battery cell from external impact.

In addition, on the other surface of the aluminum thin film, an inner resin layer is formed by a polyolefin such as polyethylene (PE), casted polypropylene (cPP) or polypropylene (PP) or a copolymer thereof in order for adhesion between a lower surface of the upper pouch and an upper surface of the lower pouch.

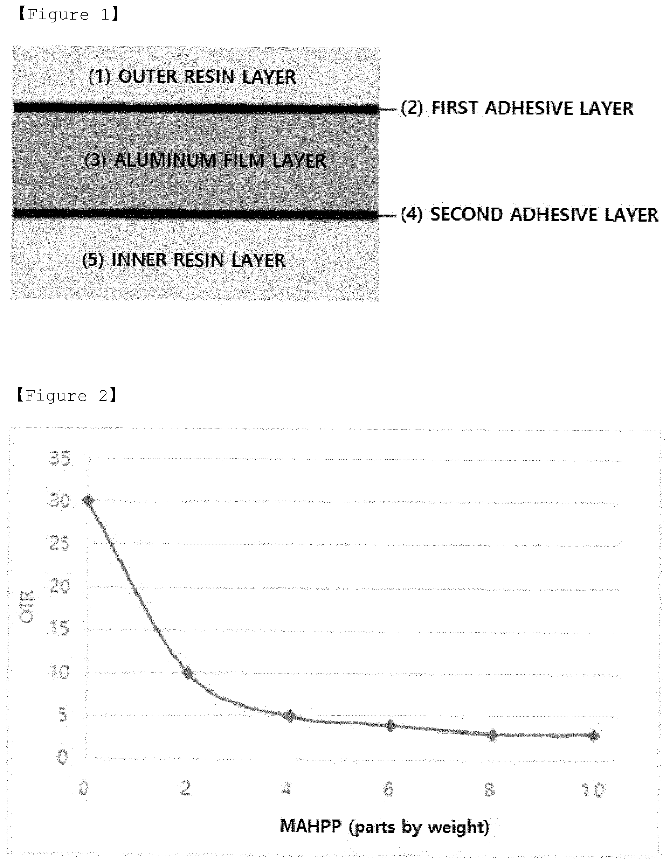

Generally, an upper pouch film forming an aluminum pouch for a secondary battery has a structure in which an outer resin layer, an adhesive layer, an aluminum film layer, an adhesive layer and an inner resin layer are laminated in this order as illustrated in FIG. 1, and a lower pouch film has a structure in which an inner resin layer, an adhesive layer, an aluminum film layer, an adhesive layer and an outer resin layer are laminated in this order.

An aluminum pouch for a secondary battery having the above-described structure may be damaged for various reasons in various processes. For example, during the process of storing the electrode assembly inside the pouch, a protruding portion such as an electrode tap or an electrode lead causes damage such as cracks on the PP or CPP layer inside the pouch, and the aluminum film layer may be exposed due to such damage.

The aluminum film layer exposed to an electrolyte solution as above may be corroded by causing a chemical reaction with the electrolyte solution, oxygen or moisture, and a corrosive gas may be generated therethrough, causing a swelling phenomenon expanding the inside of the battery.

In addition, LiPF₆ or the like, an electrolyte solution, may react with water and oxygen to generate hydrofluoric acid (HF), a corrosive gas, and such hydrofluoric acid may react with aluminum to cause a rapid exothermic reaction, and may be adsorbed on the aluminum surface as a secondary reaction to cause cracks on the pouch film.

Accordingly, various aluminum surface modification techniques have been studied in order to prevent corrosive hydrofluoric acid from contacting with aluminum as described above. As the aluminum surface modification techniques, heat treatment, or other chemical conversion treatments, sol-gel coating, primer treatment, treatments with corona, plasma and the like may be included.

However, it seems that there is a limit in resolving the above-described problems with such existing techniques.

### [Prior Art Document]

### [Patent Document]

Korean Laid-open Patent Publication No. 10-2016-0077968

### [Disclosure]

### [Technical Problem]

The present invention has been made to solve the above problems, and is aimed to provide an aluminum pouch film for a secondary battery having excellent long-term reliability under high temperature and high humidity environments and having excellent durability and safety by including an inner resin layer that is excellent in performance of preventing oxygen and moisture transmission, adhesive performance and performance of preventing HF gas transmission.

### [Technical Solution]

In order to achieve the above object, the present invention provides an aluminum pouch film for a secondary battery, the film including:
an aluminum film layer;
an outer resin layer laminated on one surface of the aluminum film layer; and
an inner resin layer laminated on the other surface of the aluminum film layer,
wherein the inner resin layer includes a polyolefin resin, an ethylene vinyl alcohol copolymer (EVOH) and a maleic anhydride polypropylene (MAHPP) resin.

### [Advantageous Effects]

An aluminum pouch film for a secondary battery according to the present invention includes an inner resin layer that is excellent in performance of preventing oxygen transmission, adhesive performance and performance of preventing HF gas transmission, so that the generation of HF gas inside the battery is suppressed due to the effect of preventing oxygen and moisture transmission, the HF gas generated inside the battery is prevented from transmitting and chemically reacting with the aluminum film layer, and long-term reliability under high temperature and high humidity environments is significantly improved, thereby providing an effects of significantly improving durability and safety of a secondary battery.

### [Description of Drawings]

FIG. 1 is a mimetic diagram illustrating a structure of an aluminum pouch film for a secondary battery.
FIG. 2 is a graph obtained by measuring an oxygen transmittance rate of an inner resin layer film having a composition of each of Examples 1 to 5 of the present invention.
FIG. 3 is a graph obtained by measuring adhesion strength of an aluminum pouch film including an inner resin layer having a composition of each of Example 3 and Comparative Example 1 of the present invention.
FIG. 4 is a graph obtained by measuring a HF gas barrier ability of an aluminum pouch film including an inner resin layer having a composition of each of Example 3 and Comparative Example 1 of the present invention.

### [Best Mode]

Hereinafter, embodiments of the present invention will be described in detail with reference to accompanying drawings so that those skilled in the art may readily implement the present invention. However, the present invention may be embodied in various different forms, and is not limited to the embodiments described herein. In addition, the same reference numerals in the drawings refer to the same constituents, and a size or thickness of each constituent may be exaggerated for convenience of description.

In the present specification, a description of a certain member being placed "on" another member includes not only a case of a certain member being in contact with another member but a case of still another member being present between the two members.

In the present specification, a description that a part "includes" certain constituents means that it may further include other constituents, rather than excluding other constituents unless particularly stated on the contrary.

Hereinafter, preferred embodiments of the present invention will be described in detail.

An aluminum pouch film for a secondary battery of the present invention includes an aluminum film layer; an outer resin layer laminated on one surface of the aluminum film layer; and an inner resin layer laminated on the other surface of the aluminum film layer,
wherein the inner resin layer includes a polyolefin resin, an ethylene vinyl alcohol copolymer (EVOH) and a maleic anhydride polypropylene (MAHPP) resin.

A first adhesive layer may be laminated between the aluminum film layer and the outer resin layer, and a second adhesive layer may be laminated between the aluminum film layer and the inner resin layer.

The inner resin layer may include 29% by weight to 90% by weight of the polyolefin resin, 5% by weight to 70% by weight of the ethylene vinyl alcohol copolymer (EVOH) and 1% by weight to 20% by weight of the maleic anhydride polypropylene resin;
preferably 35% by weight to 70% by weight of the polyolefin resin, 25% by weight to 60% by weight of the ethylene vinyl alcohol copolymer (EVOH) and 1.5% by weight to 15% by weight of the maleic anhydride polypropylene resin; and
more preferably 40% by weight to 55% by weight of the polyolefin resin, 40% by weight to 55% by weight of the ethylene vinyl alcohol copolymer (EVOH) and 3.5% by weight to 10% by weight of the maleic anhydride polypropylene resin.

If the polyolefin resin is included in less than the above range, it is not preferable since properties such as heat sealability, moisture-proof properties, heat resistance and lamination processability may be reduced, and if the polyolefin resin is included in excess of the above range, it is not preferable since problems such as reducing room temperature moldability and whitening phenomenon occur.

If the ethylene vinyl alcohol copolymer (EVOH) is included in less than the above range, it is not preferable since an oxygen and moisture barrier effect becomes insufficient, and if the ethylene vinyl alcohol copolymer (EVOH) included in excess of the above range, it is not preferable since problems such as reducing heat sealability and interfacial peeling occur.

Including the maleic anhydride polypropylene resin is included in less than the above range, it is not preferable since the ethylene vinyl alcohol copolymer (EVOH) resin is not sufficiently dispersed in the polyolefin resin, lowering the oxygen transmittance rate, and if the ionomer resin is included in excess of the above range, it is not preferable since problems such as reducing room temperature moldability and heat sealability, and interfacial peeling occur.

The polyolefin resin may preferably be polyethylene (PE), polypropylene (PP), or a copolymer thereof.

Specific examples of the polyolefin used above may include polyethylene such as low-density polyethylene, medium-density polyethylene, high-density polyethylene and linear low-density polyethylene; polypropylene such as homopolypropylene, a block copolymer of polypropylene (for example, block copolymer of propylene and ethylene) and a random copolymer of polypropylene (for example, random copolymer of propylene and ethylene); a ternary copolymer of ethylene-butene-propylene; and the like. Among these polyolefins, polyethylene and polypropylene are preferably included.

Meanwhile, as the polyolefin used in the present invention, polyolefins known in the art may be used without limit.

When the polyolefin such as polyethylene or polypropylene or a copolymer thereof is used in the inner resin layer, it is preferable since processability such as lamination is favorable as well as having properties required as a packaging material for a secondary battery such as favorable heat sealability, moisture-proof properties and heat resistance. The thickness of the polymer layer of the inner resin layer is preferably from 20 um to 100 um and more preferably from 30 um to 80 um in consideration of moldability, insulating properties, electrolyte solution resistance and the like. If the above range is not satisfied, problems such as deterioration in moldability, insulating properties and electrolyte solution resistance may occur.

The polyolefin resin may have a melt flow index of 0.3 to 10 and more preferably 1 to 5.

The ethylene vinyl alcohol copolymer (EVOH) is a copolymer represented by the following Chemical Formula 1 and has excellent material blocking properties, and in particular, provides excellent effects in blocking oxygen and moisture. 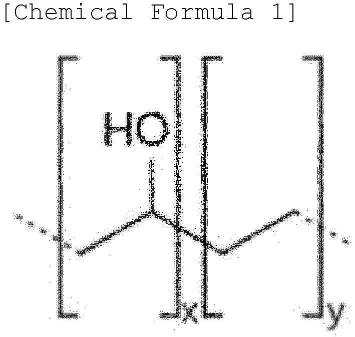 wherein, x and y are molar ratios of the vinyl alcohol structural unit and the ethylene structural unit, and x may be 0.3 to 0.7, y may be 0.3 to 0.7, and x+y is 1.

More preferably, x may be 0.4 to 0.6, and y may be 0.4 to 0.6, and more preferably, x may be 0.5 to 0.6, and y may be 0.4 to 0.5.

The ethylene vinyl alcohol copolymer resin may have a melt flow index of 0.5 to 50 and more preferably 0.8 to 20. Specifically, for example, EP-E105B (trade name) manufactured by Kuraray Co., Ltd. may be used, however, the ethylene vinyl alcohol copolymer resin is not limited to this copolymer.

The maleic anhydride polypropylene resin is used as a compatibilizer for enhancing dispersion and bonding strength between the ethylene vinyl alcohol copolymer and the polyolefin polymer, and also performs a role of adsorbing and fixing HF gas generated inside the pouch.

As the maleic anhydride polypropylene resin, a resin represented by the following Chemical Formula 2 may be used. 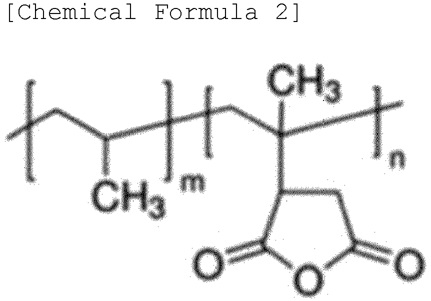 wherein, m and n are a molar ratio of each structural unit, and m may be 0.3 to 0.7, n may be 0.3 to 0.7, and x+y is 1.

In the above formula, preferably, m may be 0.4 to 0.6 and n may be 0.4 to 0.6, and more preferably, m may be 0.5 to 0.6 and n may be 0.4 to 0.5.

The maleic anhydride polypropylene resin may have a melt flow index of 50 to 300 and more preferably 100 to 200. As specific examples, Exxon^{™} PO1015 manufactured by ExxonMobil may be used, however, the maleic anhydride polypropylene resin is not limited to this copolymer.

Hereinafter, other constitutions of the aluminum pouch film for a secondary battery of the present invention will be exemplarily described. However, the present invention is not limited by the following constitutions, and constitutions known in the art may also be employed in addition to the following constitutions.

### Aluminum Film Layer

In the aluminum pouch film for a secondary battery of the present invention, the aluminum film layer is used as a barrier layer for preventing penetration of oxygen, moisture or the like from the outside. As a material of the aluminum, aluminum or an alloy of aluminum is suitable. As the alloy of aluminum, an alloy obtained by adding various metals and non-metals to pure aluminum or a stainless alloy may be used. As the aluminum film layer, soft aluminum foil may be preferably used, and more preferably, iron-containing aluminum foil may be used to provide moldability to aluminum foil. As for the aluminum foil, series with high purity has excellent processability, and therefore, aluminum alloy foil in No. 1000 series or No. 8000 series is preferred. In addition, the aluminum base may optionally be an alloy including an element selected from the group consisting of silicon, boron, germanium, arsenic, antimony, copper, magnesium, manganese, zinc, lithium, iron, chromium, vanadium, titanium, bismuth, potassium, tin, lead, zirconium, nickel, cobalt and combinations thereof. In the iron-containing aluminum foil, the iron component may be included preferably 0.1% by weight to 9.0% by weight, and more preferably 0.5% by weight to 2.0% by weight with respect to the total aluminum foil weight. If the iron content is less than 0.1% by weight in the aluminum foil, softness of the aluminum film layer decreases, and if the iron content is contained in excess of 9.0% by weight, it causes a problem of reducing moldability. The aluminum foil may have the surface etched or degreased in order to enhance adhesiveness with the inner resin layer, however, the treatment may be skipped to reduce the process speed. The aluminum film layer is for preventing penetration of gas and water vapor into a battery from the outside, and the aluminum thin film is required to have no pin holes and processing suitability (pouching, emboss forming). The thickness is preferably from 10 um to 100 um, and is more preferably from 30 um to 50 um in consideration of processability, oxygen and moisture barrier properties, and the like. If the thickness is less than 10 µm, the aluminum film layer is readily torn and has reduced electrolytic resistance and insulating properties, and if the thickness exceeds 50 µm, the aluminum film layer has a problem of reducing moldability.

### Outer Resin Layer

In the aluminum pouch film for a secondary battery of the present invention, the outer resin layer corresponds to a portion in direct contact with hardware, and therefore, is preferably a resin having insulating properties. Accordingly, as a resin used as the outer resin layer, it is preferable to use a polyester resin such as polyethylene terephthalate, polybutylene terephthalate, polyethylene naphthalate, polybutylene naphthalate, copolymerized polyester or polycarbonate, or a nylon film.

Specific examples of the polyester resin may include polyethylene terephthalate (PET), polybutylene terephthalate (PBT), polyethylene naphthalate (PEN), polybutylene naphthalate (PBN), copolymerized polyester, polycarbonate (PC) and the like. In addition, specific examples of the polyester may include polyethylene terephthalate, polybutylene terephthalate, polyethylene naphthalate, polybutylene naphthalate, polyethylene isophthalate, polycarbonate, copolymerized polyester employing ethylene terephthalate as a main repeating unit, copolymerized polyester employing butylene terephthalate as a main repeating unit and the like. In addition, specific examples of the copolymerized polyester employing ethylene terephthalate as a main repeating unit may include copolymer polyester polymerized with ethylene isophthalate while employing ethylene terephthalate as a main repeating unit, polyethylene (terephthalate/isophthalate), polyethylene (terephthalate/adipate), polyethylene (terephthalate/sodium sulfoisophthalate), polyethylene (terephthalate/sodium isophthalate), polyethylene (terephthalate/phenyl-dicarboxylate), polyethylene (terephthalate/decane dicarboxylate) and the like. In addition, examples of the copolymerized polyester while employing butylene terephthalate as a main repeating unit may include copolymer polyester polymerized with butylene isophthalate employing butylene terephthalate as a main repeating unit, polybutylene (terephthalate/adipate), polybutylene (terephthalate/sebacate), polybutylene (terephthalate/decane dicarboxylate), polybutylene naphthalate and the like. These polyesters may be used either alone as one type, or as a combination of two or more types.

Specific examples of the polyamide resin may include aliphatic-based polyamides such as nylon 6, nylon 66, nylon 610, nylon 12, nylon 46, and a copolymer of nylon 6 and nylon 66; aromatic group-including polyamides such as hexamethylenediamine-isophthalic acid-terephthalic acid copolymerized polyamide such as nylon 6I, nylon 6T, nylon 6IT and nylon 6I6T (I represents isophthalic acid, and T represents terephthalic acid) including a structural unit derived from terephthalic acid and/or isophthalic acid, and polymetaxylene adipamide (MXD6); alicyclic-based polyamides such as polyaminomethylcyclohexyl adipamide (PACM6); or polyamides obtained by copolymerizing a lactam component or an isocyanate component such as 4,4'-diphenylmethane-diisocyanate, a polyesteramide copolymer or a polyetheresteramide copolymer, which is a copolymer of copolymerized polyamide and polyester or polyalkylene ether glycol; copolymers thereof, and the like. These polyamides may be used either alone as one type, or as a combination of two or more types.

In the outer resin layer as above, as a film for packaging a secondary battery, it is particularly preferable to use a nylon film. The nylon film is mainly used as a packaging film by having excellent heat resistance, cold resistance and mechanical strength as well as having excellent disruptive strength, pin-hole resistance, gas barrier properties and the like. Specific examples of the nylon film may include polyamide resins, that is, nylon 6, nylon 66, a copolymer of nylon 6 and nylon 66, nylon 610, polymetaxylylene adipamide (MXD6) and the like. When laminating the outer resin layer, a thickness of the laminated outer resin layer is preferably 10 um to 30 um or greater, and particularly preferably 12 um to 25 um. If the above range is not satisfied, there are problems in that the outer resin layer is readily torn due to reduced physical properties when the thickness is less than 10 µm, and moldability is reduced when the thickness exceeds 30 um.

### First Adhesive Layer

The first adhesive layer is a layer increasing adhesiveness between the outer resin layer-aluminum foil layer. The adhesive layer is formed by an adhesive resin capable of adhering a base layer and a metal layer. The adhesive resin used for forming the adhesive layer may be a two-component curable adhesive resin or a one-component curable adhesive resin. In addition, an adhesion mechanism of the adhesive resin used for forming the adhesive layer is not particularly limited as well, and any of chemical reaction type, solvent volatilization type, heat melting type, heat pressure type and the like may be used.

Specific examples of the resin component of the adhesive resin used for forming the adhesive layer may include polyester-based resins such as polyethylene terephthalate, polybutylene terephthalate, polyethylene naphthalate, polybutylene naphthalate, polyethylene isophthalate, polycarbonate and copolymerized polyester; polyether-based adhesives; polyurethane-based adhesives; epoxy-based resins; phenol resin-based resins; polyamide-based resins such as nylon 6, nylon 66, nylon 12 and copolymerized polyamide; polyolefin-based resins such as polyolefin, acid-modified polyolefin and metal-modified polyolefin; polyvinyl acetate-based resins; cellulose-based adhesives; (meth)acryl-based resins; polyimide-based resins; amino resins such as a urea resin and a melamine resin; rubber such as chloroprene rubber, nitrile rubber and styrene-butadiene rubber; silicone-based resins; fluorinated ethylene propylene copolymers and the like. These adhesive resin components may be used either alone as one type, or as a combination of two or more types.

The combination type of the two or more types of adhesive resin components is not particularly limited, however, examples thereof may include a composite resin of polyamide and acid-modified polyolefin, a composite resin of polyamide and metal-modified polyolefin, polyamide and polyester, a composite resin of polyester and acid-modified polyolefin, a composite resin of polyester and metal-modified polyolefin, and the like. Among them, polyurethane-based two-component curable adhesive resins; polyamide, polyester, or blended resins of these and modified polyolefin may be preferably included in terms of having excellent malleability, durability or anti-restraint function under a high humidity condition, or anti-deteriorating function during heat sealing, and effectively suppressing occurrences of delamination through suppressing a decrease in the lamination strength between the base layer and the metal layer.

The first adhesive layer is a layer increasing adhesiveness between the outer resin layer-aluminum film layer. The first adhesive layer may be formed using materials known as an adhesive used for laminating the resin film and aluminum foil. Examples of the corresponding adhesive may include a polyurethane-based adhesive containing a main agent including a polyol such as polyester polyol, polyether polyol, acrylic polyol or carbonate polyol, and a curing agent including a difunctional or higher isocyanate compound. The polyurethane-based resin is formed by acting the curing agent on the main agent.

First, a polyol may be included as the component of the adhesive.

Examples of the polyol compound used for the urethane-type adhesive may include polyester polyol, polyesterpolyurethane polyol, polyether polyol, polyetherpolyurethane polyol and the like. Hydroxyl group equivalents and weight average molecular weights of these polyol compounds are not particularly limited as long as the above-mentioned properties are satisfied finally in relation to the isocyanate-based compound to combine, however, for example, the hydroxyl group equivalent (number/mol) may be 0.5 to 2.5 and preferably 0.7 to 1.9, and the weight average molecular weight may be 500 to 120000 and preferably 1000 to 80000. Among these polyol compounds, polyester polyol, polyesterpolyurethane polyol and polyetherpolyurethane polyol are preferably included. These polyol compounds may be used either alone as one type, or as a combination of two or more types.

As the polyester polyol, materials obtained by reacting at least one type of polybasic acid and at least one type of diol may be used. Examples of the polybasic acid may include dibasic acids of aliphatic-based dibasic acids such as succinic acid, glutaric acid, adipic acid, pimelic acid, suberic acid, azelaic acid, sebacic acid and brassylic acid, and aromatic-based dibasic acids such as isophthalic acid, terephthalic acid and naphthalene dicarboxylic acid, and the like. Examples of the diol may include aliphatic-based diols such as ethylene glycol, propylene glycol, butanediol, neopentyl glycol, methyl pentanediol, hexanediol, heptanediol, octanediol, nonanediol, decanediol and dodecanediol, alicyclic-based diols such as cyclohexanediol and hydrogen-added xylylene glycol, and aromatic-based diols such as xylylene glycol, and the like.

In addition, as the polyester polyol, polyester urethane polyols obtained by chain-extending hydroxyl groups at both ends of the polyester polyol using a single product of isocyanate compound, or an adduct product, a biuret product or an isocyanurate product including at least one type of isocyanate compound, and the like may be included. Examples of the isocyanate compound may include 2,4- or 2,6-tolylene diisocyanate, xylylene isocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, isopropylidene dicyclohexyl-4,4'-diisocyanate and the like.

As the acrylic polyol, copolymers having poly(meth)acrylic acid as a main component may be included. Examples of the corresponding copolymer may include materials obtained by copolymerizing, starting with a hydroxyl group-containing monomer such as 2-hydroxyethyl (meth)acrylate or 2-hydroxypropyl (meth)acrylate, an alkyl (meth)acrylate-based monomer in which the alkyl group is a methyl group, an ethyl group, an n-propyl group, an i-propyl group, an n-butyl group, an i-butyl group, a t-butyl group, a 2-ethylhexyl group or a cyclohexyl group; an amide group-containing monomer such as (meth)acrylamide, N-alkyl (meth)acrylamide, N,N-dialkyl (meth)acrylamide (the alkyl group is a methyl group, an ethyl group, an n-propyl group, an i-propyl group, an n-butyl group, an i-butyl group, a t-butyl group, a 2-ethylhexyl group, a cyclohexyl group or the like), N-alkoxy (meth)acrylamide, N,N-dialkoxy (meth)acrylamide (the alkoxy group is a methoxy group, an ethoxy group, a butoxy group, an isobutoxy group or the like), N-methylol (meth)acrylamide or N-phenyl (meth)acrylamide; a glycidyl group-containing monomer such as glycidyl (meth)acrylate or allyl glycidyl ether; a silane-containing monomer such as (meth)acryloxypropyl trimethoxysilane or (meth)acryloxypropyl triethoxysilane; and an isocyanate group-containing monomer such as (meth)acryloxypropyl isocyanate.

As the carbonate polyol, materials obtained by reacting a carbonate compound and diol may be used. As the carbonate compound, dimethyl carbonate, diphenyl carbonate, ethylene carbonate and the like may be used. As the diol, aliphatic diols such as ethylene glycol, propylene glycol, butanediol, neopentyl glycol, methylpentanediol, hexanediol, heptanediol, octanediol, nonanediol, decanediol and dodecanediol, alicyclic diols such as cyclohexanediol and hydrogen-added xylylene glycol, aromatic diols such as xylylene glycol, and the like may be used.

In addition, polycarbonate urethane polyols obtained by chain-extending the hydroxyl group at the end of the carbonate polyol using the above-described isocyanate compound may be used.

Next, an isocyanate may be included as the component of the adhesive.

Examples of the isocyanate-based compound used for the urethane-type adhesive may include polyisocyanate, adduct products thereof, isocyanurate modified products thereof, carbodiimide modified products thereof, allophanate modified products thereof, biuret modified products thereof and the like. Specific examples of the polyisocyanate may include aromatic diisocyanates such as diphenylmethane diisocyanate (MDI), polyphenylmethane diisocyanate (polymeric MDI), toluene diisocyanate (TDI), hexamethylene diisocyanate (HDI), bis (4-isocyanatecyclohexyl)methane (H12MDI), isophorone diisocyanate (IPDI), 1,5-naphthalene diisocyanate (1,5-NDI), 3,3'-dimethyl-4,4'-diphenylene diisocyanate (TODI) and xylene diisocyanate (XDI); aliphatic diisocyanates such as trimethylene diisocyanate, hexamethylene diisocyanate, trimethylhexamethylene diisocyanate and isophorone diisocyanate; alicyclic diisocyanates such as 4,4'-methylenebis(cyclohexylisocyanate) and isophorone diisocyanate, and the like. Specific examples of the adduct product may include those obtained by adding trimethylolpropane, glycol or the like to the polyisocyanate. Among these isocyanate-based compounds, preferably polyisocyanate and adduct products thereof; more preferably aromatic diisocyanate, adduct products thereof and isocyanurate modified products thereof; even more preferably MDI, polymeric MDI, TDI, adduct products thereof and isocyanurate modified products thereof; and particularly preferably adduct products of MDI, adduct products of TDI, polymeric MDI, and isocyanurate modified products of TDI may be included. These isocyanate-based compounds may be used either alone as one type, or as a combination of two or more types.

As the difunctional or higher isocyanate compound used as the curing agent, types of the isocyanate compounds used as the chain extender may be used, and, although repeating, a single product of isocyanate compounds selected from among 2,4- or 2,6-tolylene diisocyanate, xylylene isocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate and isopropylidene dicyclohexyl-4,4'-diisocyanate, or an adduct product, a biuret product or an isocyanurate product including at least one type of the isocyanate compound selected from among the isocyanate compounds may be used.

As the mixed amount of the curing agent, 1 part by mass to 100 parts by mass is preferred with respect to 100 parts by mass of the main agent, and 5 parts by mass to 50 parts by mass is more preferred. If the content of the curing agent is less than 1 part by mass, performance may not be expressed in terms of adhesiveness or electrolyte solution resistance. If the content of the curing agent exceeds 100 parts by mass, an excess isocyanate group is present, which may affect adhesive film quality by the remaining of unreacted materials, or may affect hardness.

For facilitating adhesion, a carbodiimide compound, an oxazoline compound, an epoxy compound, a phosphorous compound, a silane coupling agent and the like may also be mixed to the polyurethane-based adhesive.

Examples of the carbodiimide compound may include N,N'-di-o-toluyl carbodiimide, N,N'-diphenyl carbodiimide, N,N'-di-2,6-dimethylphenyl carbodiimide, N,N'-bis(2,6-diisopropylphenyl)carbodiimide, N,N'-dioctyldecyl carbodiimide, N-triyl-N'-cyclohexyl carbodiimide, N,N'-di-2,2-di-t-butylphenyl carbodiimide, N-triyl-N'-phenyl carbodiimide, N,N'-di-p-nitrophenyl carbodiimide, N,N'-di-p-aminophenyl carbodiimide, N,N'-di-p-hydroxyphenyl carbodiimide, N,N'-di-cyclohexyl carbodiimide, N,N'-di-p-toluyl carbodiimide and the like.

Examples of the oxazoline compound may include monooxazoline compounds such as 2-oxazoline, 2-methyl-2-oxazoline, 2-phenyl-2-oxazoline, 2,5-dimethyl-2-oxazoline and 2,4-diphenyl-2-oxazoline, and dioxazoline compounds such as 2,2'-(1,3-phenylene)-bis(2-oxazoline), 2,2'-(1,2-ethylene)-bis(2-oxazoline), 2,2'-(1,4-butylene)-bis(2-oxazoline) and 2,2'-(1,4-phenylene)-bis(2-oxazoline) .

Examples of the epoxy compound may include diglycidyl ether of aliphatic diols such as 1,6-hexanediol, neopentyl glycol and polyalkylene glycol, polyglycidyl ether of aliphatic polyols such as sorbitol, sorbitan, polyglycerol, pentaerythritol, diglycerol, glycerol and trimethylolpropane, polyglycidyl ether of alicyclic polyols such as cyclohexane dimethanol, diglycidyl ester or polyglycidyl ester of aliphatic or aromatic polycarboxylic acids such as terephthalic acid, isophthalic acid, naphthalene dicarboxylic acid, trimellitic acid, adipic acid and sebacic acid, diglycidyl ether or polyglycidyl ether of polyphenols such as resorcinol, bis-(p-hydroxyphenyl)methane, 2,2-bis-(p-hydroxyphenyl)propane, tris-(p-hydroxyphenyl)methane and 1,1,2,2-tetrakis(p-hydroxyphenyl)ethane, N-glycidyl derivatives of amine such as N,N'-diglycidyl aniline, N,N,N-diglycidyl toluidine and N,N,N' ,N'-tetraglycidyl-bis-(p-aminophenyl)methane, triglycidyl derivatives of aminophenol, triglycidyltris(2-hydroxyethyl)isocyanurate, triglycidyl isocyanurate, ortho-cresol-type epoxy, phenol novolac-type epoxy resins and the like.

Examples of the phosphorous-based compound may include tris(2,4-di-t-butylphenyl)phosphite, tetrakis(2,4-di-t-butylphenyl)-4,4'-biphenylene phosphonite, bis(2,4-di-t-butylphenyl)pentaerythritol-di-phosphite, bis(2,6-di-t-butyl-4-methylphenyl)pentaerythritol-di-phosphite, 2,2-methylenebis(4,6-di-t-butylphenyl)octyl phosphite, 4,4'-butylidene-bis(3-methyl-6-t-butylphenyl-di-tridecyl)phosphite, 1,1,3-tris(2-methyl-4-ditridecyl phosphite-5-t-butylphenyl) butane, tris(mixed mono- and di- nonylphenyl)phosphite, tris(nonylphenyl)phosphite, 4,4'-isopropylidenebis(phenyldialkyl phosphite) and the like.

Examples of the silane coupling agent may include various silane coupling agents such as vinyltriethoxysilane, vinyltris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropyltrimethoxysilane, γ-aminopropyltriethoxysilane and N-β-(aminoethyl)-γ-aminopropyltrimethoxysilane.

The adhesive used for forming the adhesive layer satisfying properties of a packaging film for a secondary battery of the present invention may preferably include a urethane-type adhesive including at least one type of polyol compound selected from the group consisting of polyester polyol, polyesterpolyurethane polyol, polyether polyol and polyetherpolyurethane polyol, and at least one type of isocyanate-based compound selected from the group consisting of aromatic diisocyanate, adduct products thereof and isocyanurate modified products thereof; more preferably include a urethane-type adhesive including at least one type of polyol compound selected from the group consisting of polyester polyol, polyesterpolyurethane polyol, polyether polyol and polyetherpolyurethane polyol, and at least one type of isocyanate-based compound selected from the group consisting of MDI, polymeric MDI, TDI, adduct products thereof and isocyanurate modified products thereof.

In addition, in the adhesive including the polyol compound (main agent) and the isocyanate-based compound (curing agent), a ratio thereof is properly set depending on the properties to be provided in the adhesive layer, however, for example, the ratio of the isocyanate group of the isocyanate-based compound per 1 mole of the hydroxyl group of the polyol compound may be from 1 mole to 30 moles, and preferably from 3 moles to 20 moles.

The first adhesive layer preferably has a thickness of 2 um to 10 um and more preferably 3 um to 5 um considering adhesiveness with the outer resin layer and thickness after molding. If the thickness is less than 2 µm, adhesiveness decreases, and if the thickness exceeds 10 µm, problems such as producing cracks and the like may occur.

### Second Adhesive Layer

The second adhesive layer is a layer increasing adhesiveness between the inner resin layer-aluminum film layer.

In the aluminum pouch film for a secondary battery of the present invention, a polyurethane, an acid-modified polyolefin resin, an epoxy or the like may be used as the second adhesive layer. Specific examples of the second adhesive may include maleic anhydride polypropylene (MAHPP) and the like.

Examples of the heat-adhesive olefin-based resin may include polyethylene, an ethylene-α-olefin copolymer, an ethylene-acrylic acid copolymer, an ethylene-methacrylic acid copolymer, an ethylene-acrylic acid ester copolymer, an ethylene-methacrylic acid ester copolymer, an ethylene-vinyl acetate copolymer, an ionomer, polypropylene, maleic anhydride-modified polypropylene, an ethylene-propylene copolymer, a propylene-1-butene-ethylene copolymer and the like, and may preferably include one or more types of olefin-based resins selected from the group consisting of polypropylene, an ethylene-propylene copolymer and a propylene-1-butene-ethylene copolymer.

The acid-modified polyolefin used for forming the second adhesive layer is a polymer modified by graft polymerizing polyolefin with unsaturated carboxylic acid. Specific examples of the acid-modified polyolefin may include polyethylene such as low-density polyethylene, medium-density polyethylene, high-density polyethylene or linear low-density polyethylene; crystalline or amorphous polypropylene such as homopolypropylene, a block copolymer of polypropylene (for example, block copolymer of propylene and ethylene) and a random copolymer of polypropylene (for example, random copolymer of propylene and ethylene); a ternary copolymer of ethylene-butene-propylene, and the like. Among these polyolefins, polyolefins having at least propylene as a forming monomer are preferably included, and a ternary copolymer of ethylene-butene-propylene and a random copolymer of propylene-ethylene may be more preferably included in terms of heat resistance. Examples of the unsaturated carboxylic acid used for modification may include maleic acid, acrylic acid, itaconic acid, crotonic acid, maleic anhydride, itaconic anhydride and the like. Among these unsaturated carboxylic acids, maleic acid and maleic anhydride are preferably included. The acid-modified polyolefin may be used either alone as one type, or as a combination of two or more types.

The second adhesive layer preferably has a thickness of 2 um to 10 um and more preferably 3 um to 5 um considering adhesiveness with the inner layer and thickness after molding. If the thickness is less than 2 µm, adhesiveness decreases, and if the thickness exceeds 5 µm, problems such as producing cracks and the like may occur.

When laminating the inner layer and the aluminum film layer on the second adhesive layer, the method is not particularly limited, however, a dry lamination method, a heat lamination method or an extrusion lamination method may be preferably used for the lamination.

### Method for Manufacturing Aluminum Pouch Film for Secondary Battery

The aluminum pouch film for a secondary battery of the present invention may be manufactured using a method including:
a) preparing an aluminum film layer; b) forming an outer resin layer on a first surface of the aluminum film layer; c) preparing an inner resin layer including a compound in which a fluoropolymer resin, a polyolefin and a functional resin chemically bond; and d) adhering the inner resin layer to a second surface of the aluminum film layer.

### a) Preparing Aluminum Film Layer

The aluminum film material is the same as described above.

As the aluminum film, aluminum foil may be used. Untreated aluminum foil with no pre-treatment may be used, however, using degreased aluminum foil is more preferred in terms of providing electrolysis liquid resistance, electrolyte solution resistance and the like. As the degreasing treatment method, a wet-type or dry-type treatment method may be included.

Examples of the wet-type degreasing treatment may include acid degreasing or alkali degreasing. Examples of the acid used in the acid decreasing may include inorganic acids such as sulfuric acid, acetic acid, phosphoric acid and hydrofluoric acid, and the acid may be used either alone as one type, or as a combination of two or more types. In addition, when necessary, various metal salts may be mixed thereto in order to enhance an etching effect of the aluminum foil. Examples of the alkali used in the alkali degreasing may include strong alkalis such as sodium hydroxide, and those having a weak alkali-based or a surfactant mixed thereto may also be used.

Examples of the dry-type degreasing treatment may include a method of degreasing using a process of annealing aluminum at a high temperature.

### b) Forming Outer Resin Layer on First Surface of Aluminum Film Layer

A first adhesive layer is coated on the aluminum film layer prepared in the step a). Herein, the thickness of the coated first adhesive layer is preferably from 2 um to 10 um and more preferably from 3 um to 5 um considering adhesiveness with the outer resin layer and thickness after molding. If the above range is not satisfied, adhesiveness may decrease when the thickness is less than 2 um, and cracks may occur when the thickness exceeds 10 um.

On the first adhesive layer coated as above, an outer resin layer is laminated, and the outer resin layer is formed through lamination using a dry lamination method or an extrusion lamination method.

### c) Preparing Inner Resin Layer

The inner resin layer may be prepared by blending 40 parts by weight to 90 parts by weight of a polyolefin resin; 5 parts by weight to 70 parts by weight of an ethylene vinyl alcohol copolymer (EVOH); and 1 part by weight to 20 parts by weight of a maleic anhydride polypropylene resin.

### d) Adhering Inner Resin Layer to Second Surface of Aluminum Film Layer

As a second adhesive layer for adhering the aluminum film layer and the inner resin layer, a polyurethane, an acid-modified polyolefin resin, an epoxy or the like may be used, and specific examples thereof may include maleic anhydride polypropylene (MAHPP) and the like.

The thickness of the second adhesive layer is preferably from 2 um to 30 um and more preferably from 3 um to 15 um considering adhesiveness with the inner resin layer and thickness after molding. If the above range is not satisfied, adhesiveness may decrease when the thickness is less than 2 um, and cracks may occur when the thickness exceeds 30 um.

When laminating the inner resin layer on the aluminum film layer, a drying lamination method or an extrusion lamination method may be, although not particularly limited thereto, preferably used to laminate the inner resin layer.

Hereinbefore, preferred embodiments of the present invention have been described in detail, however, the scope of a right of the present invention is not limited thereto, and various modified and improved forms made by those skilled in the art using the basic concept of the present invention defined in the claims also fall within the scope of a right of the present invention.

### Example and Comparative Example: Manufacture of Pouch Film

In order to laminate an outer resin layer on a first surface of aluminum foil (product of Dong-il Aluminum Co., Ltd.) having a thickness of 40 µm, a polyurethane adhesive resin (product of Hi-chem Co., Ltd.) having a thickness of 4 um was coated using a gravure roll method, and then a nylon 6 film (product of Hyosung) having a thickness of 25 um was dry laminated to laminate the nylon film on the aluminum layer. After that, in order to laminate an inner resin layer on a second surface of the aluminum foil, corresponding components were blended in a weight ratio of the following Table 1, and the inner resin layer was prepared using a multilayer lamination extruder (extruder of multilayer head block). The inner resin layer was extruded to a thickness of 40 µm, and then laminated on the aluminum using an adhesive (ADMER) to manufacture a pouch film.

**[Table 1]**

| | EVOH | MAHPP | Polyvinyl Fluoride | PP |
|---|---|---|---|---|
| Comparative Example 1 | 0 | 5 | 6 | 89 |
| Comparative Example 2 | 50 | 0 | 0 | 50 |
| Example 1 | 50 | 2 | 0 | 50 |
| Example 2 | 50 | 4 | 0 | 50 |
| Example 3 | 50 | 6 | 0 | 50 |
| Example 4 | 50 | 8 | 0 | 50 |
| Example 5 | 50 | 10 | 0 | 50 |

| | | | | |
|---|---|---|---|---|
| (Unit: parts by weight) PP: cPP, product of Hanwha Total Company EVOH: manufactured by Kuraray Company, EP-E105B (trade name) MAHPP: maleic anhydride polypropylene (Exxon^{™}, PO1015) | | | | |

### Experimental Example 1: Measurement of Oxygen Transmittance Rate (OTR: cc/m² day)

An oxygen transmittance rate was measured using the inner resin layer film prepared in the composition of each of Examples 1 to 5 during the process for manufacturing the aluminum pouch film, and the results are shown in FIG. 2.

From FIG. 2, it may be identified that, as the MAHPP resin content increases, the degree of dispersion of EVOH in PP is enhanced, which lowers the oxygen transmittance rate.

### Experimental Example 2: Measurement of Adhesion Strength

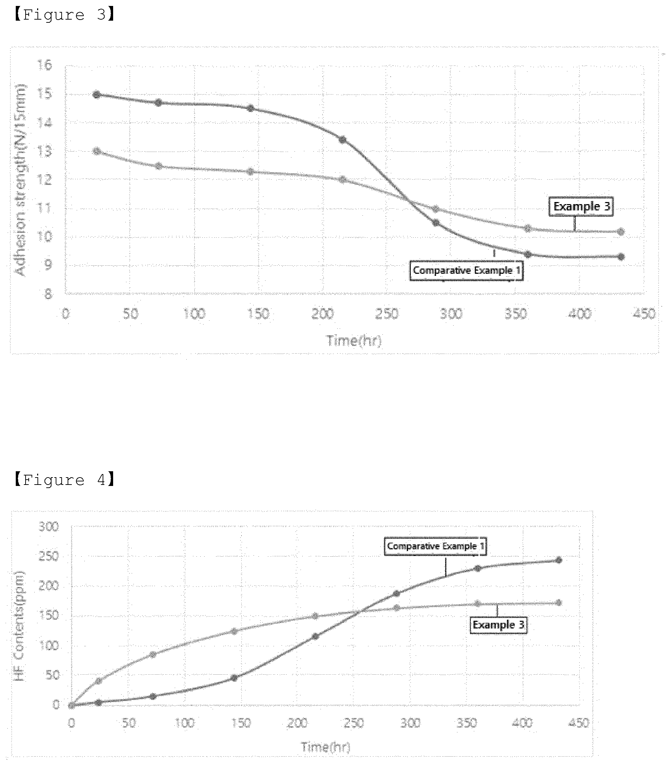

Adhesion strength was measured using the aluminum pouch film manufactured in the composition of each of Example 3 and Comparative Example 1, and the results are shown in FIG. 3. The experiment was conducted under a constant temperature and humidity environment of 85°C/85 RH% for long-term reliability evaluation.

As identified from FIG. 3, the aluminum pouch film of Comparative Example 1 (including fluoropolymer) had higher adhesion strength than the aluminum pouch film of Example 3 before 270 hours, however, after 270 hours, adhesion strength of the aluminum pouch film of Example 3 was better maintained since, in the aluminum pouch film of Comparative Example 1 (including fluoropolymer), bonding strength decreased due to phase separation between fluorine and polyolefin.

### Experimental Example 3: Measurement of HF Gas Concentration

A dummy cell was prepared using the aluminum pouch film manufactured in the composition of Example 3 or Comparative Example 1, and after a certain period of time passed, the concentration of HF gas included in the electrolyte solution was measured, and the results are shown in FIG. 4. The experiment was conducted under a constant temperature and humidity environment of 85°C/85 RH% for long-term reliability evaluation.

As identified from FIG. 4, the electrolyte solution included in the aluminum pouch film of Comparative Example 1 (including fluoropolymer) had a lower HF concentration before 250 hours, however, after 250 hours, the electrolyte solution of the aluminum pouch film of Example 3 maintained a lower HF concentration since, in the aluminum pouch film of Comparative Example 1, properties were reduced (bonding strength decreased between interfaces).

The tendency of HF concentration to decrease after 250 hours in Example 3 is considered to be the result of the -COONa functional group of the MAHPP resin and the HF forming a NaF bond, thereby adsorbing and fixing the HF in the ionomer resin in the form of a "neutralization bond". In other words, it is considered that the amount of HF diffusion decreases as such a result.

## Claims

1. An aluminum pouch film for a secondary battery, the film comprising:
an aluminum film layer;
an outer resin layer laminated on one surface of the aluminum film layer; and
an inner resin layer laminated on the other surface of the aluminum film layer,
wherein the inner resin layer includes a polyolefin resin, an ethylene vinyl alcohol copolymer (EVOH) and a maleic anhydride polypropylene resin.

2. The film of claim 1, wherein the inner resin layer comprises 29% by weight to 90% by weight of the polyolefin resin, 5% by weight to 70% by weight of the ethylene vinyl alcohol copolymer (EVOH) and 1% by weight to 20% by weight of the maleic anhydride polypropylene resin.

3. The film of claim 1, wherein the polyolefin is polyethylene (PE), polypropylene (PP) or a copolymer thereof.

4. The film of claim 1, wherein the ethylene vinyl alcohol copolymer (EVOH) is a copolymer represented by the following Chemical Formula 1: 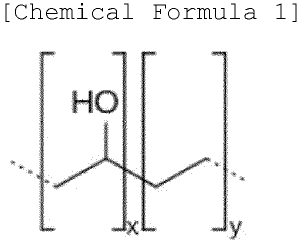 wherein, x and y are molar ratios of the vinyl alcohol structural unit and the ethylene structural unit, and x may be 0.3 to 0.7, y may be 0.3 to 0.7, and x+y is 1.

5. The film of claim 1, wherein the maleic anhydride polypropylene resin is a copolymer represented by the following Chemical Formula 2: 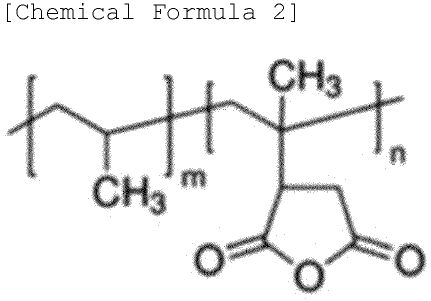 wherein, m and n are a molar ratio of each structural unit, and m may be 0.3 to 0.7, n may be 0.3 to 0.7, and x+y is 1.

6. The film of claim 1, wherein the outer resin layer is formed with a nylon film.

7. The film of claim 1, wherein a first adhesive layer is laminated between the aluminum film layer and the outer resin layer; and a second adhesive layer is laminated between the aluminum film layer and the inner resin layer.
